# EUROPEAN PATENT APPLICATION

(11) **EP 3 828 842 A1**
(43) Date of publication of application: **02.06.2021**
(21) Application number: 19842294.1
(22) Date of filing: 20.03.2019
(51) Int. Cl.: G07F 15/00

(54) **SCHEDULING METHOD FOR MOBILE BATTERY SWAPPING DEVICE, SYSTEM, SCHEDULING SERVER, AND APPARATUS**

(30) Priority: 26.07.2018 CN 201810835145
(71) Applicant: NIO (ANHUI) HOLDING CO., LTD, Economic and Technological Development Zone Hefei Anhui 230601 (CN)
(72) Inventor: YANG, Chao, Shanghai 201804 (CN); ZHAO, Jianzhi, Shanghai 201804 (CN); CHEN, Jiong, Shanghai 201804 (CN)
(74) Representative: Patentwerk B.V.
(86) International application number: PCT/CN2019/078846
(87) International publication number: WO 2020/019736

(57) **Abstract**

Provided are a scheduling method and system for a mobile battery swap apparatus, a scheduling server, and a device, which relate to the field of battery charging and swapping for electric vehicles, and aim to solve the problem that the number and distribution of charging piles and battery swap stations cannot meet the requirements. The scheduling method for a mobile battery swap apparatus supports a sharing mode and a self-service mode. In the sharing mode, a user end initiates a battery swap request after parking at any position, and a server broadcasts a battery swap order for a service terminal to obtain, or selects a service terminal by assigning an order, so that a battery swap operation is performed on a vehicle with a battery to be swapped. In the self-service mode, the user end selects a mobile battery swap apparatus and initiates a battery swap request, and after confirmation by the server, a user completes battery swap by himself/herself or with the assistance of a service executor requested through the user end. A reclaiming management method is further proposed, forming a complete solution, thereby solving difficulties in finding charging piles and battery swap stations, and alleviating range anxiety of a user.

## Description

### Technical Field

The invention relates to the field of battery charging and swapping for electric vehicles, and in particular to a scheduling method and system for a mobile battery swap apparatus, a scheduling server, and a device.

### Background Art

As clean-energy vehicles, electric vehicles have good application prospects. However, electric vehicles still face "difficulties in battery charging and swapping" in the process of promotion and use:
(1) Charging piles are difficult to find, and a vehicle owner does not know where to charge.
(2) Charging piles are not easy to use, with poor compatibility, and inconvenient use and billing.
(3) Charging piles are not easy to install. Due to limitations on parking space and electric capacity, there would be more or less obstructions during approval and installation of household charging piles and direct-current fast charging piles.
(4) The battery swap stations are sparsely distributed, which cannot meet the timely battery swap requirements.
(5) The vehicle owner has range anxiety, that is, the vehicle owner worries that electricity would be running out suddenly when driving an electric vehicle, which will cause mental pain or anxiety.

In view of the above problems, a valet energy replenishment or battery swap mode can solve the above problems to a certain extent, but the valet energy replenishment or battery swap mode has the following disadvantages:

The service personnel need to drive the vehicle of the vehicle owner to replenish energy or swap a battery, and the vehicle owner may have concerns. It is also troublesome to deal with problems such as vehicle bumps in the process of a valet service. Due to the need for a large number of valet service personnel, the single service cost is still high.

### Summary of the Invention

In order to solve the above problems in the prior art, the invention proposes a scheduling method and system for a mobile battery swap apparatus, a scheduling server, and a device, which effectively solves difficulties in battery charging and swap due to insufficient battery charging and swap points.

According to an aspect of the invention, a scheduling method for a mobile battery swap apparatus is proposed, comprising the following steps:

step S 10: receiving battery swap request information initiated by a user end, the battery swap request information comprising a requested service mode; and

step S20: allocating a mobile battery swap apparatus to the user end on the basis of the requested service mode according to a preset mobile battery swap apparatus allocation strategy.

Preferably, the service mode comprises a self-service mode and a sharing mode, wherein
when the service mode is the self-service mode, the battery swap request information further comprises an ID of a mobile battery swap apparatus requested to be allocated; and
when the service mode is the sharing mode, the battery swap request information further comprises an ID and position information of a vehicle with a battery to be swapped.

Preferably, the preset mobile battery swap apparatus allocation strategy comprises:
when the service mode is the self-service mode, if the mobile battery swap apparatus requested to be allocated is in an idle state, allocating, to the user end, the mobile battery swap apparatus requested to be allocated; otherwise, specifying a matching mobile battery swap apparatus for the user end, and returning an ID of the mobile battery swap apparatus; and
when the service mode is the sharing mode, selecting a matching mobile battery swap apparatus for the user end according to the battery swap request information,
wherein
the mobile battery swap apparatus requested to be allocated is a mobile battery swap apparatus independently selected by the user end.

Preferably, when the requested service mode is the self-service mode, the step of "specifying a matching mobile battery swap apparatus for the user end" specifically comprises:
acquiring the ID and the position information of the vehicle with a battery to be swapped;
acquiring information about each mobile battery swap apparatus that is currently in an idle state, wherein the information about the mobile battery swap apparatus comprises an ID and position information of the mobile battery swap apparatus, and information indicating whether the mobile battery swap apparatus is loaded with a fully charged traction battery pack; and
specifying, for the user end from mobile battery swap apparatuses in an idle state that are loaded with fully charged traction battery packs, a mobile battery swap apparatus closest to the vehicle with a battery to be swapped according to the position information of the vehicle with a battery to be swapped, and the position information of each mobile battery swap apparatus that is currently in an idle state.

Preferably, said "selecting a matching mobile battery swap apparatus for the user end according to the battery swap request information" further comprises:
acquiring information about each mobile battery swap apparatus that is currently in an idle state, wherein the information about the mobile battery swap apparatus comprises an ID and position information of the mobile battery swap apparatus, and information indicating whether the mobile battery swap apparatus is loaded with a fully charged traction battery pack; and
selecting, for the user end from mobile battery swap apparatuses in an idle state that are loaded with fully charged traction battery packs, a mobile battery swap apparatus closest to the vehicle with a battery to be swapped according to the position information of the vehicle with a battery to be swapped, and the position information of each mobile battery swap apparatus that is currently in an idle state.

Preferably, the method further comprises:
in the self-service mode, if it is determined that the mobile battery swap apparatus that the user end requests to be allocated is in an idle state, returning request success information to the user end, so that a battery swap operation is performed on the vehicle with a battery to be swapped in the self-service mode; and
in the sharing mode, selecting a service terminal according to the battery swap request information and position information of the allocated mobile battery swap apparatus, so that a battery swap operation is performed on the vehicle with a battery to be swapped in the sharing mode.

Preferably, "a battery swap operation being performed on the vehicle with a battery to be swapped in the self-service mode" comprises:
driving, by a user, the vehicle with a battery to be swapped to a position of the allocated mobile battery swap apparatus for battery swap; or
transporting, by a user, the allocated mobile battery swap apparatus to a position of the vehicle with a battery to be swapped for battery swap; or
broadcasting, by the user end, a battery swap order, and transporting, by a service executor corresponding to a service terminal that acquires the battery swap order, the allocated mobile battery swap apparatus to a position of the vehicle with a battery to be swapped for battery swap.

Preferably, said "selecting a service terminal according to the battery swap request information and position information of the allocated mobile battery swap apparatus, so that a battery swap operation is performed on the vehicle with a battery to be swapped in the sharing mode" further comprises:
broadcasting a battery swap order to each service terminal according to the battery swap request information and the position information of the allocated mobile battery swap apparatus; and
determining whether a current battery swap order is acquired by a service terminal, and if yes, sending, to the service terminal, guidance information corresponding to the mobile battery swap apparatus and guidance information corresponding to the vehicle to be charged; otherwise, selecting a service terminal through assignment.

Preferably, the scheduling method further comprises:
after the battery swap ends, sending a reclaiming management instruction and reclaiming guidance information to a reclaiming management end or the service terminal or the user end according to the position information of the allocated mobile battery swap apparatus and position information of a reclaiming management site, so that the allocated mobile battery swap apparatus is transported to the reclaiming management site for storage, and an under-voltage traction battery pack in the mobile battery swap apparatus is charged; or after the battery swap ends, sending an automatic return instruction to the allocated mobile battery swap apparatus, so that the allocated mobile battery swap apparatus automatically returns to its original position.

According to a second aspect of the invention, a storage device storing a program is further proposed, wherein the program is adapted to be loaded and executed by a processor to implement the scheduling method for a mobile battery swap apparatus described above.

According to a third aspect of the invention, a processing device is further proposed, comprising a processor and a memory, wherein
the processor is adapted to execute a program; and the memory is adapted to store the program, wherein the program is adapted to be loaded and executed by the processor to implement the scheduling method for a mobile battery swap apparatus described above.

According to a fourth aspect of the invention, a scheduling server is further proposed, comprising a battery swap request receiving module and an allocation module,
the battery swap request receiving module being configured to receive battery swap request information initiated by a user end, wherein the battery swap request information comprises a requested service mode; and
the allocation module communicatively connected to the battery swap request receiving module being configured to allocate a mobile battery swap apparatus to the user end on the basis of the requested service mode according to a preset mobile battery swap apparatus allocation strategy.

Preferably, the service mode comprises a self-service mode and a sharing mode, wherein
when the requested service mode is the self-service mode, the battery swap request information further comprises an ID of a mobile battery swap apparatus requested to be allocated; and
when the requested service mode is the sharing mode, the battery swap request information further comprises an ID and position information of a vehicle with a battery to be swapped.

Preferably, the allocation module comprises a first allocation unit and a second allocation unit,
the first allocation unit being configured to: when the service mode is the self-service mode, if the mobile battery swap apparatus requested to be allocated is in an idle state, allocate, to the user end, the mobile battery swap apparatus requested to be allocated; otherwise, specify a matching mobile battery swap apparatus for the user end, and return an ID of the mobile battery swap apparatus, wherein the mobile battery swap apparatus requested to be allocated is a mobile battery swap apparatus independently selected by the user end; and
the second allocation unit being configured to: when the service mode is the sharing mode, select a matching mobile battery swap apparatus for the user end according to the battery swap request information.

Preferably, the first allocation unit comprises a determination subunit, an allocation subunit, and a specifying subunit,
the determination subunit being configured to determine whether the mobile battery swap apparatus requested to be allocated is in an idle state;
the allocation subunit being configured to: when the mobile battery swap apparatus requested to be allocated is in an idle state, allocate, to the user end, the mobile battery swap apparatus requested to be allocated; and
the specifying subunit being configured to: when the mobile battery swap apparatus requested to be allocated is not in an idle state, acquire the ID and the position information of the vehicle with a battery to be swapped, and acquire information about each mobile battery swap apparatus that is currently in an idle state, wherein the information about the mobile battery swap apparatus comprises an ID and position information of the mobile battery swap apparatus, and information indicating whether the mobile battery swap apparatus is loaded with a fully charged traction battery pack; and specify, for the user end from mobile battery swap apparatuses in an idle state that are loaded with fully charged traction battery packs, a mobile battery swap apparatus closest to the vehicle with a battery to be swapped according to the position information of the vehicle with a battery to be swapped, and the position information of each mobile battery swap apparatus that is currently in an idle state, and return an ID of the mobile battery swap apparatus.

Preferably, the second allocation unit comprises an information acquisition subunit and a selection subunit,
the information acquisition subunit being configured to acquire information about each mobile battery swap apparatus that is currently in an idle state, wherein the information about the mobile battery swap apparatus comprises an ID and position information of the mobile battery swap apparatus, and information indicating whether the mobile battery swap apparatus is loaded with a fully charged traction battery pack; and
the selection subunit being configured to select, for the user end from mobile battery swap apparatuses in an idle state that are loaded with fully charged traction battery packs, a mobile battery swap apparatus closest to the vehicle with a battery to be swapped according to the position information of the vehicle with a battery to be swapped, and the position information of each mobile battery swap apparatus that is currently in an idle state.

Preferably, the server further comprises a confirmation module and a service terminal selection module,
the confirmation module being configured to: in the self-service mode, if it is determined that the mobile battery swap apparatus that the user end requests to be allocated is in an idle state, return request success information to the user end, so that a battery swap operation is performed on the vehicle with a battery to be swapped in the self-service mode; and
the service terminal selection module being configured to: in the sharing mode, select a service terminal according to the battery swap request information and position information of the allocated mobile battery swap apparatus, so that a battery swap operation is performed on the vehicle with a battery to be swapped in the sharing mode.

Preferably, "a battery swap operation being performed on the vehicle with a battery to be swapped in the self-service mode" comprises:
driving, by a user, the vehicle with a battery to be swapped to a position of the allocated mobile battery swap apparatus for battery swap; or transporting, by a user, the allocated mobile battery swap apparatus to a position of the vehicle with a battery to be swapped for battery swap; or broadcasting, by the user end, a battery swap order, and transporting, by a service executor corresponding to a service terminal that acquires the battery swap order, the allocated mobile battery swap apparatus to a position of the vehicle with a battery to be swapped for battery swap.

Preferably, the service terminal selection module comprises a broadcasting unit, a control unit, a guidance unit, and an assignment unit,
the broadcasting unit being configured to broadcast a battery swap order to each service terminal according to the battery swap request information and the position information of the allocated mobile battery swap apparatus; and
the control unit being configured to: determine whether a current battery swap order is acquired by a service terminal, and if yes, invoke the guidance unit; otherwise, invoke the assignment unit;
the guidance unit being configured to send, to the service terminal, guidance information corresponding to the mobile battery swap apparatus and guidance information corresponding to the vehicle to be charged; and
the assignment unit being configured to select a service terminal through assignment.

Preferably, the server further comprises a reclaiming management module,
the reclaiming management module being configured to: after the battery swap ends, send a reclaiming management instruction and reclaiming guidance information to a reclaiming management end or the service terminal or the user end according to the position information of the allocated mobile battery swap apparatus and position information of a reclaiming management site; or after the battery swap ends, send an automatic return instruction to the allocated mobile battery swap apparatus.

According to a fifth aspect of the invention, a scheduling system for a mobile battery swap apparatus is further proposed, comprising the scheduling server described above, and at least one mobile battery swap apparatus,
the mobile battery swap apparatus being configured to perform a battery swap operation on a vehicle with a battery to be swapped.

Preferably, the system further comprises at least one user end and/or at least one service terminal, the user end being configured to initiate a battery swap request to the server, wherein the battery swap request information comprises a requested service mode; and
the service terminal being configured to: receive a battery swap order broadcast by the server and perform an order acquisition operation; receive order assignment information sent by the server; receive a battery swap order broadcast by the user end and perform an order acquisition operation; and after acquiring an order successfully or receiving an assigned order, query and locate positions of the allocated mobile battery swap apparatus, the user end, and the vehicle with a battery to be swapped.

Preferably, the service terminal and/or the user end are/is further configured to receive a reclaiming management instruction and reclaiming guidance information sent by the server, to locate the mobile battery swap apparatus according to the guidance information; and/or the scheduling system further comprises at least one reclaiming management end,
the reclaiming management end being configured to receive the reclaiming management instruction and the reclaiming guidance information of the server, to locate the mobile battery swap apparatus according to the guidance information.

Preferably, the scheduling system further comprises at least one transfer device, the transfer device being configured to transfer the mobile battery swap apparatus; and/or the mobile battery swap apparatus being provided with a transfer apparatus, and the mobile battery swap apparatus being further provided with a networked communication apparatus and a locating apparatus.

Preferably, the mobile battery swap apparatus comprises a vehicle hoisting apparatus, a traction battery pack, a traction battery removal apparatus, a shift apparatus, and an installation apparatus, wherein
the vehicle hoisting apparatus is configured to hoist the vehicle with a battery to be swapped to a specific height;
the traction battery pack is configured to replace an under-voltage traction battery pack on the vehicle with a battery to be swapped;
the traction battery removal apparatus is configured to remove the under-voltage traction battery pack on the vehicle with a battery to be swapped;
the shift apparatus is configured to shift the traction battery pack; and
the installation apparatus is configured to install the traction battery pack on the vehicle with a battery to be swapped.

Compared with the closest prior art, the invention has the following beneficial effects:

According to the scheduling method and system for a mobile battery swap apparatus that are proposed in the invention, a portable and mobile battery swap solution is proposed. The scheduling method for a mobile battery swap apparatus of the invention supports a sharing mode and a self-service mode. In the sharing mode, a user end initiates a battery swap request after parking at any position, and a server allocates a mobile battery swap apparatus according to a position of a vehicle, and broadcasts a battery swap order for a service terminal to obtain, or selects a service terminal by assigning an order, so that a battery swap operation is performed on a vehicle with a battery to be swapped. In the self-service mode, the user end selects a nearby mobile battery swap apparatus according to its position and initiates a battery swap request, and after confirmation by the server, a user completes battery swap by himself/herself or with the assistance of a service executor requested through the user end. In addition, the invention further proposes a method for billing and reclaiming management after the battery swap ends, thereby forming a complete solution. The invention not only solves difficulties of users in finding charging piles and battery swap stations, but also alleviates range anxiety, and the invention has high implementability.

### Brief Description of the Drawings

Fig. 1 is a schematic flowchart of a first embodiment of a scheduling method for a mobile battery swap apparatus according to the invention;
Fig. 2 is a schematic flowchart of a second embodiment of the scheduling method for a mobile battery swap apparatus according to the invention;
Fig. 3 is a schematic flowchart of a third embodiment of the scheduling method for a mobile battery swap apparatus according to the invention;
Fig. 4 is a schematic composition diagram of an embodiment of a scheduling server for a mobile battery swap apparatus according to the invention;
Fig. 5 is a schematic composition diagram of a first embodiment of a scheduling system for a mobile battery swap apparatus according to the invention;
Fig. 6 is a schematic composition diagram of a second embodiment of the scheduling system for a mobile battery swap apparatus according to the invention;
Fig. 7 is a schematic composition diagram of a third embodiment of the scheduling system for a mobile battery swap apparatus according to the invention;
Fig. 8 is a schematic composition diagram of a fourth embodiment of the scheduling system for a mobile battery swap apparatus according to the invention; and
Fig. 9 is a schematic composition diagram of a fifth embodiment of the scheduling system for a mobile battery swap apparatus according to the invention.

### Detailed Description of Embodiments

Preferred implementations of the invention are described below with reference to the drawings. It should be understood by those skilled in the art that these embodiments are only for explaining the technical principles of the invention and are not intended to limit the scope of protection of the invention.

There is a correspondence between a "user end" and a "vehicle with a battery to be swapped" mentioned in the embodiments of the invention, that is, the "user end" initiates a battery swap request with the purpose of swapping a traction battery for the corresponding "vehicle with a battery to be swapped". Therefore, the "user end" can be a mobile device such as a mobile phone, or a vehicle-mounted terminal. The "service executor" in the embodiments of the invention may be service personnel, or a robot capable of performing battery swap tasks. Therefore, the "service terminal" in the embodiments of the invention may be a mobile device such as a mobile phone held by service personnel, or a device provided on a robot or the like.

In the embodiments, the "service personnel" and "reclaiming management personnel" respectively refer to the personnel who provide charging services and reclaiming management, and can be employees hired by the operator, or other personnel or volunteers who are suitable for temporarily performing this task in terms of time and geographic position and voluntarily participate.

The "mobile battery swap apparatus" in the embodiments of the invention comprises a vehicle hoisting apparatus, at least one traction battery pack, a traction battery removal apparatus, a shift apparatus, an installation apparatus, and like. The mobile battery swap apparatus is provided with a transfer apparatus or is moved through a transfer device; and the mobile battery swap apparatus is provided with a locating apparatus and a networked communication apparatus, and has positioning and networking functions, so that the server, the service terminal, the user end, and the reclaiming management end can learn a position of the mobile battery swap apparatus and a status of an available battery pack. The mobile battery swap apparatus has a compact structure and a small size, and is provided with a walking mechanism (that is, wheels). The mobile battery swap apparatus, during use, can automatically enter under a chassis of a vehicle, and hoists the vehicle to a specific height with the hoisting apparatus after automatic positioning; the additional removal apparatus automatically removes an under-voltage traction battery, and then carries the battery out of the chassis of the vehicle; and the shift apparatus shifts the battery to a transfer platform, and then shifts a fully charged traction battery pack to the installation apparatus which installs the battery to the vehicle under the chassis of the vehicle, thereby completing the battery swap process.

A charging device in the embodiments is further provided with a networked communication apparatus and a locating apparatus, and has networking and GPS positioning functions, so that a server, a service terminal, a reclaiming management end, and even a user end can learn information such as a position and a use status of the charging device. The structure thereof is compact and convenient to configure in residential areas or parking lots, and has good safety.

The "fully charged traction battery pack" mentioned in the embodiments of the invention generally refers to a traction battery pack whose remaining electricity quantity is greater than a specific value and can be used to replace an original battery in a vehicle with a battery to be swapped.

The "server" in the embodiments of the invention performs unified scheduling of mobile battery swap apparatuses and can support two service modes: a self-service mode and a sharing mode. A preset mobile battery swap apparatus allocation strategy is as follows: In the self-service mode, the user end independently selects a mobile battery swap apparatus according to a geographic position of the vehicle with a battery to be swapped, and initiates a battery swap request to the server. If the server finds that the mobile battery swap apparatus that the user end requests to be allocated is in an idle state, request success information is returned to the user end; otherwise the server will specify a matching mobile battery swap apparatus for the user end. In the sharing mode, the user end directly initiates a battery swap request to the server, and the server selects a matching mobile battery swap apparatus and a service terminal. The server can be implemented on a Linux system, using database tools such as MySQL for data storage and recording.

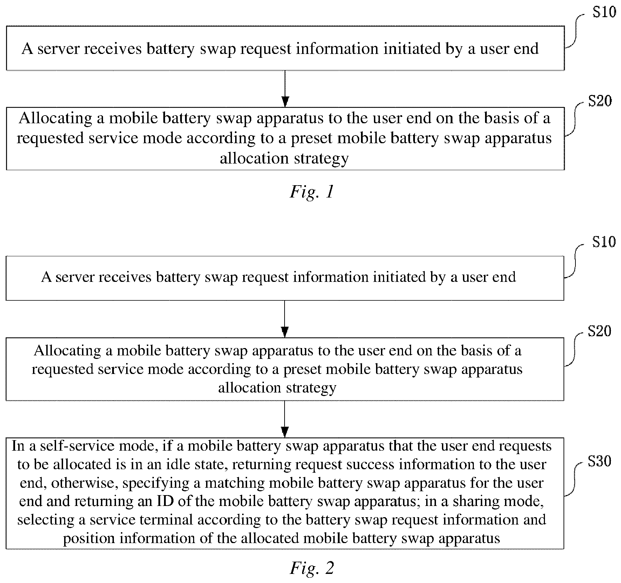

Fig. 1 is a schematic flowchart of a first embodiment of a scheduling method for a mobile battery swap apparatus according to the invention. As shown in Fig. 1, the scheduling method of this embodiment comprises the following steps.

In step S10, a server receives battery swap request information initiated by a user end.

The battery swap request information comprises a requested service mode (a self-service mode or a sharing mode); and when the requested service mode is the self-service mode, the battery swap request information further comprises an ID of a mobile battery swap apparatus requested to be allocated; and when the requested service mode is the sharing mode, the battery swap request information further comprises an ID and position information of a vehicle with a battery to be swapped.

In step S20, a mobile battery swap apparatus is allocated to the user end on the basis of the requested service mode according to a preset mobile battery swap apparatus allocation strategy. This step may further comprise steps S201 to S203.

In step S201, whether the requested service mode is the self-service mode is determined, and if yes, the method proceeds to step S202; otherwise, proceeds to step S203.

In step S202, whether the mobile battery swap apparatus requested to be allocated is in an idle state is determined, and if yes, the mobile battery swap apparatus requested to be allocated is allocated to the user end; and otherwise, a matching mobile battery swap apparatus is specified for the user end, and an ID of the mobile battery swap apparatus is returned.

The mobile battery swap apparatus requested to be allocated is a mobile battery swap apparatus independently selected by the user end that currently initiates the battery swap request, but same is officially allocated to the user end only after confirmation by the server.

Specifically, the method for the user end to independently select the mobile battery swap apparatus in this embodiment may comprise: acquiring, by the user end, an ID and position information of each mobile battery swap apparatus that is currently in an idle state, information indicating whether the mobile battery swap apparatus is loaded with a fully charged traction battery pack, and the like; and selecting, from mobile battery swap apparatuses in an idle state that are loaded with fully charged traction battery packs, a mobile battery swap apparatus closest to the vehicle with a battery to be swapped according to the acquired ID and position information of the mobile battery swap apparatus, and the position information of the vehicle with a battery to be swapped.

In step S203, a matching mobile battery swap apparatus is selected for the user end according to the battery swap request information. This step may further comprise steps S2031 and S2032.

In step S2031, information about each mobile battery swap apparatus that is currently in an idle state is acquired, the information about the mobile battery swap apparatus comprising an ID and position information of the mobile battery swap apparatus, and information indicating whether the mobile battery swap apparatus is loaded with a fully charged traction battery pack.

In step S2032, a mobile battery swap apparatus closest to the vehicle with a battery to be swapped is selected for and allocated to the user end from mobile battery swap apparatuses in an idle state that are loaded with fully charged traction battery packs, according to the position information of the vehicle with a battery to be swapped, and the position information of each mobile battery swap apparatus that is currently in an idle state.

After a mobile battery swap apparatus is allocated to a user end, a correspondence between the mobile battery swap apparatus and the user end is recorded in the server, so as to ensure that the mobile battery swap apparatus will not be repeatedly allocated to other user ends. Such a correspondence will not be canceled until the current battery swap task is completed.

In this embodiment, the step of specifying, by the server, a matching mobile battery swap apparatus for the current user end specifically comprises:
acquiring the ID and the position information of the vehicle with a battery to be swapped;
acquiring information about each mobile battery swap apparatus that is currently in an idle state, wherein the information about the mobile battery swap apparatus comprises an ID and position information of the mobile battery swap apparatus, and information indicating whether the mobile battery swap apparatus is loaded with a fully charged traction battery pack; and
specifying, for the user end from mobile battery swap apparatuses in an idle state that are loaded with fully charged traction battery packs, a mobile battery swap apparatus closest to the vehicle with a battery to be swapped according to the position information of the vehicle with a battery to be swapped, and the position information of each mobile battery swap apparatus that is currently in an idle state.

Fig. 2 is a schematic flowchart of a second embodiment of the scheduling method for a mobile battery swap apparatus according to the invention. As shown in Fig. 2, compared with the first embodiment, the scheduling method of this embodiment further comprises the steps of performing subsequent battery swap services after allocating the battery swap apparatus.

In step S30, in the self-service mode, if it is determined that the mobile battery swap apparatus that the user end requests to be allocated is in an idle state, the server returns request success information to the user end, so that a battery swap operation is performed on the vehicle with a battery to be swapped in the self-service mode; in the sharing mode, the server selects a service terminal according to the battery swap request information and position information of the allocated mobile battery swap apparatus, so that a battery swap operation is performed on the vehicle with a battery to be swapped in the sharing mode.

Specifically, in the self-service mode, a user drives the vehicle with a battery to be swapped to a position of the allocated mobile battery swap apparatus for battery swap; or a user transports the allocated mobile battery swap apparatus to a position of the vehicle with a battery to be swapped for battery swap; or the user end broadcasts a battery swap order, and a service executor corresponding to a service terminal that acquires the battery swap order transports the allocated mobile battery swap apparatus to a position of the vehicle with a battery to be swapped for battery swap.

Specifically, in the sharing mode, the server broadcasts a battery swap order to each service terminal according to the battery swap request information and the position information of the allocated mobile battery swap apparatus; and then determines whether a current battery swap order is acquired by a service terminal, and if yes, sends, to the service terminal, guidance information corresponding to the mobile battery swap apparatus and guidance information corresponding to the vehicle to be charged; otherwise, selects a service terminal through assignment; and after the service terminal is selected, a service executor corresponding to the service terminal provides battery swap services for the vehicle with a battery to be swapped.

The step of selecting a service terminal through assignment may further comprise:
acquiring position information of each service terminal that is currently in an idle state; selecting a service terminal closest to the allocated mobile battery swap apparatus according to the position information of the allocated mobile battery swap apparatus and the position information of each service terminal that is currently in an idle state; and sending the battery swap request information and the information about the mobile battery swap apparatus to the selected service terminal, and sending the guidance information corresponding to the mobile battery swap apparatus and the guidance information corresponding to the vehicle to be charged. Furthermore, the service executor corresponding to the service terminal transports the allocated mobile battery swap apparatus to the side of the vehicle with a battery to be swapped and performs a battery swap service.

The scheduling method of this embodiment may further comprise the step of billing:
after battery swap completion information sent by the user end is received, billing the user end; or after battery swap completion information sent by the service terminal is received, billing the user end through the service terminal.

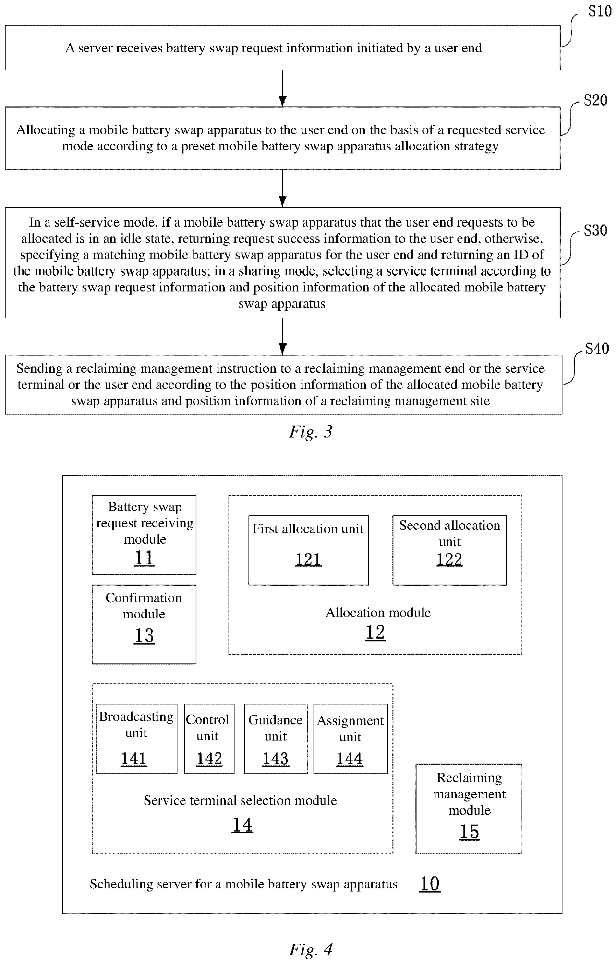

Fig. 3 is a schematic flowchart of a third embodiment of the scheduling method for a mobile battery swap apparatus according to the invention. As shown in Fig. 3, compared with the second embodiment, the scheduling method of this embodiment further comprises the step of performing mobile battery swap apparatus reclaiming management after the billing is completed.

In step S40, a reclaiming management instruction and reclaiming guidance information are sent to a reclaiming management end or the service terminal or the user end according to the position information of the allocated mobile battery swap apparatus and position information of a reclaiming management site, so that the allocated mobile battery swap apparatus is transported to the reclaiming management site for storage, and an under-voltage traction battery pack in the mobile battery swap apparatus is charged; and if the mobile battery swap apparatus has automatic positioning and movement functions, after the battery swap ends, the server may send an automatic return instruction to the allocated mobile battery swap apparatus, so that the allocated mobile battery swap apparatus automatically returns to its original position.

The reclaiming management site comprises: a centralized site or a distributed site. The centralized site means that reclaiming management sites are centrally arranged in the same place, and reclaiming can be completed by the reclaiming management end or the service terminal. The distributed site means that reclaiming management sites are scattered in different places, such as special sites opened up by residential properties, streets, etc., to store battery swap apparatuses and charge traction battery packs thereon. At such sites, reclaiming can be performed by reclaiming management personnel or service executors, or by users.

Although the steps are described in order in the above scheduling method embodiment, those skilled in the art can understand that in order to achieve the effects of this embodiment, different steps are not necessarily performed in this order, but can be performed simultaneously (in parallel) or in reverse order, and these simple variations all fall within the scope of protection of the invention.

Based on the above scheduling method, the invention further proposes an embodiment of a storage device storing a program, wherein the program is adapted to be loaded and executed by a processor to implement the scheduling method for a mobile battery swap apparatus described above.

Further, the invention further proposes an embodiment of a processing device, which comprises a processor and a memory, wherein the processor is adapted to execute a program; and the memory is adapted to store the program, wherein the program is adapted to be loaded and executed by the processor to implement the scheduling method for a mobile battery swap apparatus described above.

On the basis of the same technical concept as the above scheduling method embodiment, the invention further proposes a scheduling server, which will be described below with reference to Fig. 4.

Fig. 4 is a main schematic composition diagram of an embodiment of a scheduling server for a mobile battery swap apparatus according to the invention. As shown in Fig. 4, the server 10 of this embodiment comprises a battery swap request receiving module 11, an allocation module 12, a confirmation module 13, a service terminal selection module 14, and a reclaiming management module 15.

The battery swap request receiving module 11 is configured to receive battery swap request information initiated by a user end, the battery swap request information comprising a requested service mode (when the requested service mode is a self-service mode, the battery swap request information further comprises an ID of a mobile battery swap apparatus requested to be allocated; and when the requested service mode is a sharing mode, the battery swap request information further comprises an ID and position information of a vehicle with a battery to be swapped). The allocation module 12 communicatively connected to the battery swap request receiving module 11 is configured to allocate a mobile battery swap apparatus to the user end on the basis of the requested service mode according to a preset mobile battery swap apparatus allocation strategy. The confirmation module 13 is configured to: in the self-service mode, if it is determined that the mobile battery swap apparatus that the user end requests to be allocated is in an idle state, return request success information to the user end, so that a battery swap operation is performed on the vehicle with a battery to be swapped in the self-service mode. The service terminal selection module 14 is configured to: in the sharing mode, select a service terminal according to the battery swap request information and position information of the allocated mobile battery swap apparatus, so that a battery swap operation is performed on the vehicle with a battery to be swapped in the sharing mode. The reclaiming management module 15 is configured to: after the battery swap ends, send a reclaiming management instruction and reclaiming guidance information to a reclaiming management end or the service terminal or the user end, or send an automatic return instruction to the allocated mobile battery swap apparatus, according to the position information of the allocated mobile battery swap apparatus and position information of a reclaiming management site.

In this embodiment, the allocation module 12 comprises a first allocation unit 121 and a second allocation unit 122.

The first allocation unit 121 is configured to: when the service mode is the self-service mode, if the mobile battery swap apparatus requested to be allocated is in an idle state, allocate, to the user end, the mobile battery swap apparatus requested to be allocated; otherwise, specify a matching mobile battery swap apparatus for the user end, and return an ID of the mobile battery swap apparatus, wherein the mobile battery swap apparatus requested to be allocated is a mobile battery swap apparatus independently selected by the user end. The second allocation unit 122 is configured to: when the service mode is the sharing mode, select a matching mobile battery swap apparatus for the user end according to the battery swap request information.

The first allocation unit 121 comprises a determination subunit, an allocation subunit, and a specifying subunit.

The determination subunit is configured to determine whether the mobile battery swap apparatus requested to be allocated is in an idle state. The allocation subunit is configured to: when the mobile battery swap apparatus requested to be allocated is in an idle state, allocate, to the user end, the mobile battery swap apparatus requested to be allocated. The specifying subunit is configured to: when the mobile battery swap apparatus requested to be allocated is in a non-idle state, acquire the ID and the position information of the vehicle with a battery to be swapped, and acquire information about each mobile battery swap apparatus that is currently in an idle state, wherein the information about the mobile battery swap apparatus comprises an ID and position information of the mobile battery swap apparatus, and information indicating whether the mobile battery swap apparatus is loaded with a fully charged traction battery pack; and specify, for the user end from mobile battery swap apparatuses in an idle state that are loaded with fully charged traction battery packs, a mobile battery swap apparatus closest to the vehicle with a battery to be swapped according to the position information of the vehicle with a battery to be swapped, and the position information of each mobile battery swap apparatus that is currently in an idle state, and return an ID of the mobile battery swap apparatus.

Specifically, the second allocation unit 122 comprises an information acquisition subunit and a selection subunit.

The information acquisition subunit is configured to acquire information about each mobile battery swap apparatus that is currently in an idle state, wherein the information about the mobile battery swap apparatus comprises an ID and position information of the mobile battery swap apparatus, and information indicating whether the mobile battery swap apparatus is loaded with a fully charged traction battery pack. The selection subunit is configured to select, for the user end from mobile battery swap apparatuses in an idle state that are loaded with fully charged traction battery packs, a mobile battery swap apparatus closest to the vehicle with a battery to be swapped according to the position information of the vehicle with a battery to be swapped, and the position information of each mobile battery swap apparatus that is currently in an idle state.

In this embodiment, the service terminal selection module 14 comprises a broadcasting unit 141, a control unit 142, a guidance unit 143, and an assignment unit 144.

The broadcasting unit 141 is configured to broadcast a battery swap order to each service terminal according to the battery swap request information and the position information of the allocated mobile battery swap apparatus. The control unit 142 is configured to: determine whether a current battery swap order is acquired by a service terminal, and if yes, invoke the guidance unit 143, otherwise, invoke the assignment unit 144. The guidance unit 143 is configured to send, to the service terminal, guidance information corresponding to the mobile battery swap apparatus and guidance information corresponding to the vehicle to be charged. The assignment unit 144 is configured to select a service terminal through assignment.

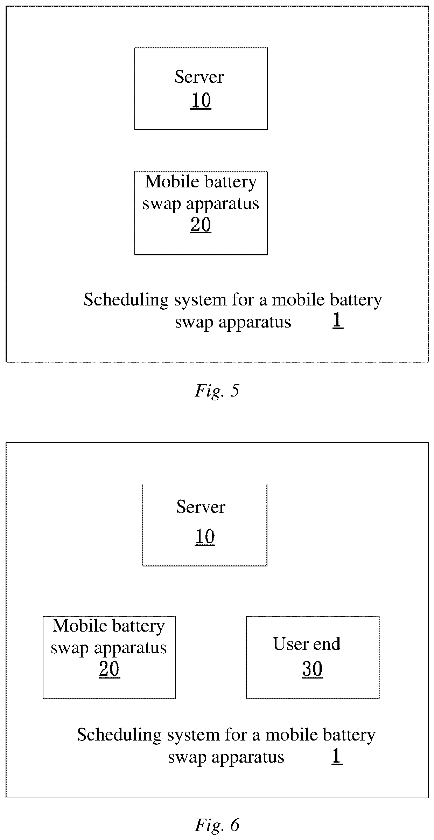

Further, on the basis of the above server, the invention further proposes a scheduling system for a mobile battery swap apparatus, which will be described below with reference to Figs. 5 to 9.

Fig. 5 is a schematic composition diagram of a first embodiment of a scheduling system for a mobile battery swap apparatus according to the invention. As shown in Fig. 5, the scheduling system 1 of this embodiment comprises a server 10 and at least one mobile battery swap apparatus 20.

The server 10 is configured to: receive battery swap request information initiated by a user end, and allocate a mobile battery swap apparatus 20 to the user end on the basis of the requested service mode according to a preset mobile battery swap apparatus allocation strategy. The specific structure and function thereof are the same as those in the server embodiment described above, and will not be described herein again. The mobile battery swap apparatus 20 is configured to perform a battery swap operation on a vehicle with a battery to be swapped.

Fig. 6 is a schematic composition diagram of a second embodiment of the scheduling system for a mobile battery swap apparatus according to the invention. As shown in Fig. 6, compared with the above first embodiment of the scheduling system, the scheduling system of this embodiment further comprises at least one user end 30.

The user end 30 is configured to initiate a battery swap request to the server 10.

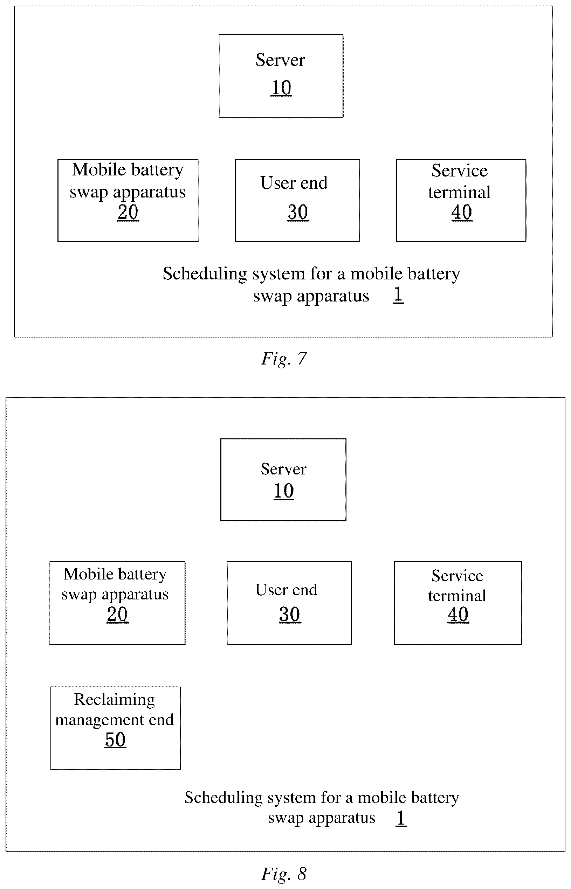

Fig. 7 is a schematic composition diagram of a third embodiment of the scheduling system for a mobile battery swap apparatus according to the invention. As shown in Fig. 7, compared with the above second embodiment of the scheduling system, the scheduling system of this embodiment further comprises at least one service terminal 40.

The service terminal 40 is configured to: receive a battery swap order broadcast by the server 10 and perform an order acquisition operation; receive order assignment information sent by the server 10; receive a battery swap order broadcast by the user end 30 and perform an order acquisition operation; and after acquiring an order successfully or receiving an assigned order, query and locate positions of the allocated mobile battery swap apparatus 20, the user end 30, and the vehicle with a battery to be swapped.

Fig. 8 is a schematic composition diagram of a fourth embodiment of the scheduling system for a mobile battery swap apparatus according to the invention. As shown in Fig. 8, compared with the above third embodiment of the scheduling system, the scheduling system of this embodiment considers the reclaiming management of mobile battery swap apparatuses. The service terminal 40 and/or the user end 30 and/or the reclaiming management end 50 may be used to receive the server's reclaiming management instruction, which is specifically as follows.

The service terminal 40 and/or the user end 30 are/is further configured to receive the reclaiming management instruction and the reclaiming guidance information sent by the server 10. Further, the service executor or the user transports the mobile battery swap apparatus 20 specified by the instruction to the reclaiming management site for storage, and uses a charging device to charge an under-voltage traction battery pack. In a sharing mode, reclaiming and charging are usually completed by the service executor; and in a self-service mode, the actions of reclaiming and charging can be completed by the user or by the service executor. A specifically used method depends on the reclaiming management instruction sent by the server 10.

The scheduling system of this embodiment may further comprise at least one reclaiming management end 50.

The reclaiming management end 50 is configured to receive the reclaiming management instruction and the reclaiming guidance information of the server 10. Further, the reclaiming management personnel reclaim the mobile battery swap apparatus 20 to the reclaiming management site for storage, and use a charging device to charge an under-voltage traction battery pack.

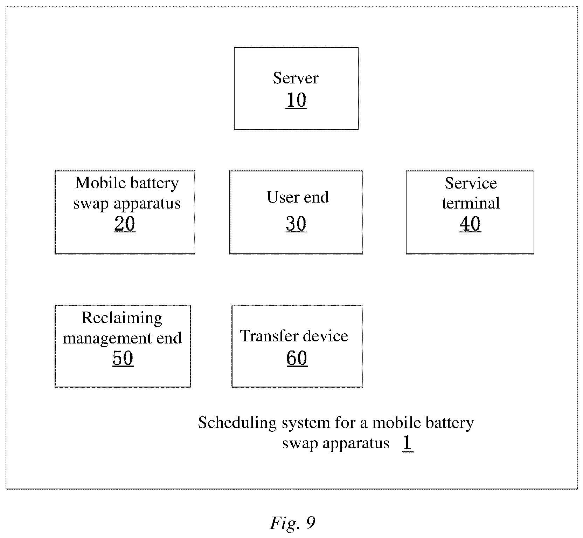

Fig. 9 is a schematic composition diagram of a fifth embodiment of the scheduling system for a mobile battery swap apparatus according to the invention. As shown in Fig. 9, compared with the above fourth embodiment of the scheduling system, the scheduling system further comprises at least one transfer device 60.

The transfer device 60 is configured to transport the mobile battery swap apparatus 20 to a destination. For example, when preparing for battery swap, the allocated mobile battery swap apparatus 20 is transported to the position of the vehicle with a battery to be swapped; and after the battery swap is completed, same is transported to the reclaiming management site. The mobile battery swap apparatus with its own transfer function can be transported without using the transfer device 60, and certainly, it can also be transported using the transfer device, to shorten the transport time.

The mobile battery swap apparatus in the embodiments of the invention can also be replaced by a mobile charging vehicle or a mobile power bank. By charging an under-voltage vehicle, the requirement of the vehicle to continue traveling on the road can also be met. If an electricity quantity of a single mobile power bank does not meet the charging requirement, a plurality of mobile power banks can be connected in series or in parallel.

Those skilled in the art should be able to realize that the method steps and system constituent units of the various examples described in conjunction with the embodiments disclosed herein can be implemented in electronic hardware, computer software or a combination of both. To clearly illustrate the interchangeability of electronic hardware and software, the compositions and steps of the various examples have been generally described in terms of functionality in the above description. Whether these functions are performed in electronic hardware or software depends on the specific application and design constraints of the technical solution. Those skilled in the art can use different methods to implement the described functions for each particular application, but such implementation should not be considered to be beyond the scope of the invention.

Heretofore, the technical solutions of the invention have been described in conjunction with the preferred implementations shown in the drawings; however, those skilled in the art can readily understand that the protection scope of the invention is obviously not limited to these specific implementations. Without departing from the principle of the invention, a person skilled in the art may make equivalent modifications or substitutions to related technical features, and the technical solutions after these modifications or substitutions shall fall within the protection scope of the invention.

## Claims

1. A scheduling method for a mobile battery swap apparatus, comprising the following steps:
step S10: receiving battery swap request information initiated by a user end, the battery swap request information comprising a requested service mode; and
step S20: allocating a mobile battery swap apparatus to the user end on the basis of the requested service mode according to a preset mobile battery swap apparatus allocation strategy.

2. The scheduling method according to claim 1, the service mode comprising a self-service mode and a sharing mode, wherein
when the service mode is the self-service mode, the battery swap request information further comprises an ID of a mobile battery swap apparatus requested to be allocated; and
when the service mode is the sharing mode, the battery swap request information further comprises an ID and position information of a vehicle with a battery to be swapped.

3. The scheduling method according to claim 2, the preset mobile battery swap apparatus allocation strategy comprising:
when the service mode is the self-service mode, if the mobile battery swap apparatus requested to be allocated is in an idle state, allocating, to the user end, the mobile battery swap apparatus requested to be allocated; otherwise, specifying a matching mobile battery swap apparatus for the user end, and returning an ID of the mobile battery swap apparatus; and
when the service mode is the sharing mode, selecting a matching mobile battery swap apparatus for the user end according to the battery swap request information,
wherein
the mobile battery swap apparatus requested to be allocated is a mobile battery swap apparatus independently selected by the user end.

4. The scheduling method according to claim 3, wherein when the requested service mode is the self-service mode, the step of "specifying a matching mobile battery swap apparatus for the user end" specifically comprises:
acquiring the ID and the position information of the vehicle with a battery to be swapped;
acquiring information about each mobile battery swap apparatus that is currently in an idle state, wherein the information about the mobile battery swap apparatus comprises an ID and position information of the mobile battery swap apparatus, and information indicating whether the mobile battery swap apparatus is loaded with a fully charged traction battery pack; and
specifying, for the user end from mobile battery swap apparatuses in an idle state that are loaded with fully charged traction battery packs, a mobile battery swap apparatus closest to the vehicle with a battery to be swapped according to the position information of the vehicle with a battery to be swapped, and the position information of each mobile battery swap apparatus that is currently in an idle state.

5. The scheduling method according to claim 3, wherein said "selecting a matching mobile battery swap apparatus for the user end according to the battery swap request information" further comprises:
acquiring information about each mobile battery swap apparatus that is currently in an idle state, wherein the information about the mobile battery swap apparatus comprises an ID and position information of the mobile battery swap apparatus, and information indicating whether the mobile battery swap apparatus is loaded with a fully charged traction battery pack; and
selecting, for the user end from mobile battery swap apparatuses in an idle state that are loaded with fully charged traction battery packs, a mobile battery swap apparatus closest to the vehicle with a battery to be swapped according to the position information of the vehicle with a battery to be swapped, and the position information of each mobile battery swap apparatus that is currently in an idle state.

6. The scheduling method according to claim 3, further comprising:
in the self-service mode, if it is determined that the mobile battery swap apparatus that the user end requests to be allocated is in an idle state, returning request success information to the user end, so that a battery swap operation is performed on the vehicle with a battery to be swapped in the self-service mode; and
in the sharing mode, selecting a service terminal according to the battery swap request information and position information of the allocated mobile battery swap apparatus, so that a battery swap operation is performed on the vehicle with a battery to be swapped in the sharing mode.

7. The scheduling method according to claim 6, wherein "a battery swap operation being performed on the vehicle with a battery to be swapped in the self-service mode" comprises:
driving, by a user, the vehicle with a battery to be swapped to a position of the allocated mobile battery swap apparatus for battery swap; or
transporting, by a user, the allocated mobile battery swap apparatus to a position of the vehicle with a battery to be swapped for battery swap; or
broadcasting, by the user end, a battery swap order, and transporting, by a service executor corresponding to a service terminal that acquires the battery swap order, the allocated mobile battery swap apparatus to a position of the vehicle with a battery to be swapped for battery swap.

8. The scheduling method according to claim 6, wherein said "selecting a service terminal according to the battery swap request information and position information of the allocated mobile battery swap apparatus, so that a battery swap operation is performed on the vehicle with a battery to be swapped in the sharing mode" further comprises:
broadcasting a battery swap order to each service terminal according to the battery swap request information and the position information of the allocated mobile battery swap apparatus; and
determining whether a current battery swap order is acquired by a service terminal, and if yes, sending, to the service terminal, guidance information corresponding to the mobile battery swap apparatus and guidance information corresponding to the vehicle to be charged; otherwise, selecting a service terminal through assignment.

9. The scheduling method according to any one of claims 1 to 8, further comprising:
after the battery swap ends, sending a reclaiming management instruction and reclaiming guidance information to a reclaiming management end or the service terminal or the user end according to the position information of the allocated mobile battery swap apparatus and position information of a reclaiming management site, so that the allocated mobile battery swap apparatus is transported to the reclaiming management site for storage, and an under-voltage traction battery pack in the mobile battery swap apparatus is charged; or
after the battery swap ends, sending an automatic return instruction to the allocated mobile battery swap apparatus, so that the allocated mobile battery swap apparatus automatically returns to its original position.

10. A storage device storing a program, wherein the program is adapted to be loaded and executed by a processor to implement a scheduling method for a mobile battery swap apparatus according to any one of claims 1 to 9.

11. A processing device, comprising a processor and a memory, wherein
the processor is adapted to execute a program; and
the memory is adapted to store the program,
wherein the program is adapted to be loaded and executed by the processor to implement a scheduling method for a mobile battery swap apparatus according to any one of claims 1 to 9.

12. A scheduling server, comprising: a battery swap request receiving module and an allocation module,
the battery swap request receiving module being configured to receive battery swap request information initiated by a user end, wherein the battery swap request information comprises a requested service mode; and
the allocation module communicatively connected to the battery swap request receiving module being configured to allocate a mobile battery swap apparatus to the user end on the basis of the requested service mode according to a preset mobile battery swap apparatus allocation strategy.

13. The server according to claim 12, the service mode comprising a self-service mode and a sharing mode, wherein
when the requested service mode is the self-service mode, the battery swap request information further comprises an ID of a mobile battery swap apparatus requested to be allocated; and
when the requested service mode is the sharing mode, the battery swap request information further comprises an ID and position information of a vehicle with a battery to be swapped.

14. The server according to claim 13, the allocation module comprising: a first allocation unit and a second allocation unit,
the first allocation unit being configured to: when the service mode is the self-service mode, if the mobile battery swap apparatus requested to be allocated is in an idle state, allocate, to the user end, the mobile battery swap apparatus requested to be allocated; otherwise, specify a matching mobile battery swap apparatus for the user end, and return an ID of the mobile battery swap apparatus, wherein the mobile battery swap apparatus requested to be allocated is a mobile battery swap apparatus independently selected by the user end; and
the second allocation unit being configured to: when the service mode is the sharing mode, select a matching mobile battery swap apparatus for the user end according to the battery swap request information.

15. The server according to claim 14, the first allocation unit comprising a determination subunit, an allocation subunit, and a specifying subunit,
the determination subunit being configured to determine whether the mobile battery swap apparatus requested to be allocated is in an idle state;
the allocation subunit being configured to: when the mobile battery swap apparatus requested to be allocated is in an idle state, allocate, to the user end, the mobile battery swap apparatus requested to be allocated; and
the specifying subunit being configured to: when the mobile battery swap apparatus requested to be allocated is in a non-idle state, acquire the ID and the position information of the vehicle with a battery to be swapped, and acquire information about each mobile battery swap apparatus that is currently in an idle state, wherein the information about the mobile battery swap apparatus comprises an ID and position information of the mobile battery swap apparatus, and information indicating whether the mobile battery swap apparatus is loaded with a fully charged traction battery pack; and specify, for the user end from mobile battery swap apparatuses in an idle state that are loaded with fully charged traction battery packs, a mobile battery swap apparatus closest to the vehicle with a battery to be swapped according to the position information of the vehicle with a battery to be swapped, and the position information of each mobile battery swap apparatus that is currently in an idle state, and return an ID of the mobile battery swap apparatus.

16. The server according to claim 14, the second allocation unit comprising an information acquisition subunit and a selection subunit,
the information acquisition subunit being configured to acquire information about each mobile battery swap apparatus that is currently in an idle state, wherein the information about the mobile battery swap apparatus comprises an ID and position information of the mobile battery swap apparatus, and information indicating whether the mobile battery swap apparatus is loaded with a fully charged traction battery pack; and
the selection subunit being configured to select, for the user end from mobile battery swap apparatuses in an idle state that are loaded with fully charged traction battery packs, a mobile battery swap apparatus closest to the vehicle with a battery to be swapped according to the position information of the vehicle with a battery to be swapped, and the position information of each mobile battery swap apparatus that is currently in an idle state.

17. The server according to claim 14, further comprising a confirmation module and a service terminal selection module,
the confirmation module being configured to: in the self-service mode, if it is determined that the mobile battery swap apparatus that the user end requests to be allocated is in an idle state, return request success information to the user end, so that a battery swap operation is performed on the vehicle with a battery to be swapped in the self-service mode; and
the service terminal selection module being configured to: in the sharing mode, select a service terminal according to the battery swap request information and position information of the allocated mobile battery swap apparatus, so that a battery swap operation is performed on the vehicle with a battery to be swapped in the sharing mode.

18. The server according to claim 17, wherein "a battery swap operation being performed on the vehicle with a battery to be swapped in the self-service mode" comprises:
driving, by a user, the vehicle with a battery to be swapped to a position of the allocated mobile battery swap apparatus for battery swap; or
transporting, by a user, the allocated mobile battery swap apparatus to a position of the vehicle with a battery to be swapped for battery swap; or
broadcasting, by the user end, a battery swap order, and transporting, by a service executor corresponding to a service terminal that acquires the battery swap order, the allocated mobile battery swap apparatus to a position of the vehicle with a battery to be swapped for battery swap.

19. The server according to claim 17, the service terminal selection module comprising a broadcasting unit, a control unit, a guidance unit, and an assignment unit,
the broadcasting unit being configured to broadcast a battery swap order to each service terminal according to the battery swap request information and the position information of the allocated mobile battery swap apparatus; and
the control unit being configured to: determine whether a current battery swap order is acquired by a service terminal, and if yes, invoke the guidance unit; otherwise, invoke the assignment unit;
the guidance unit being configured to send, to the service terminal, guidance information corresponding to the mobile battery swap apparatus and guidance information corresponding to the vehicle to be charged; and
the assignment unit being configured to select a service terminal through assignment.

20. The server according to claim 17, further comprising a reclaiming management module,
the reclaiming management module being configured to: after the battery swap ends, send a reclaiming management instruction and reclaiming guidance information to a reclaiming management end or the service terminal or the user end according to the position information of the allocated mobile battery swap apparatus and position information of a reclaiming management site; or
after the battery swap ends, send an automatic return instruction to the allocated mobile battery swap apparatus.

21. A scheduling system for a mobile battery swap apparatus, comprising a scheduling server according to any one of claims 12 to 20, and at least one mobile battery swap apparatus,
the mobile battery swap apparatus being configured to perform a battery swap operation on a vehicle with a battery to be swapped.

22. The scheduling system according to claim 21, further comprising at least one user end, the user end being configured to initiate a battery swap request to the server, wherein the battery swap request information comprises a requested service mode; and/or
the scheduling system further comprising at least one service terminal, the service terminal being configured to: receive a battery swap order broadcast by the server and perform an order acquisition operation; receive order assignment information sent by the server; receive a battery swap order broadcast by the user end and perform an order acquisition operation; and after acquiring an order successfully or receiving an assigned order, query and locate positions of the allocated mobile battery swap apparatus, the user end, and the vehicle with a battery to be swapped.

23. The scheduling system according to claim 22, the service terminal and/or the user end being further configured to receive a reclaiming management instruction and reclaiming guidance information sent by the server, to locate the mobile battery swap apparatus according to the guidance information; and/or
the scheduling system further comprising at least one reclaiming management end, the reclaiming management end being configured to receive the reclaiming management instruction and the reclaiming guidance information of the server, to locate the mobile battery swap apparatus according to the guidance information.

24. The scheduling system according to claim 23, further comprising at least one transfer device, the transfer device being configured to transfer the mobile battery swap apparatus; and/or
the mobile battery swap apparatus being provided with a transfer apparatus, and
the mobile battery swap apparatus being further provided with a networked communication apparatus and a locating apparatus.

25. The scheduling system according to any one of claims 21 to 24, the mobile battery swap apparatus comprising a vehicle hoisting apparatus, a traction battery pack, a traction battery removal apparatus, a shift apparatus, and an installation apparatus, wherein
the vehicle hoisting apparatus is configured to hoist the vehicle with a battery to be swapped to a specific height;
the traction battery pack is configured to replace an under-voltage traction battery pack on the vehicle with a battery to be swapped;
the traction battery removal apparatus is configured to remove the under-voltage traction battery pack on the vehicle with a battery to be swapped;
the shift apparatus is configured to shift the traction battery pack; and
the installation apparatus is configured to install the traction battery pack on the vehicle with a battery to be swapped.
